**Europäisches Patentamt**

**European Patent Office**

**Office européen des brevets**

(11) Veröffentlichungsnummer : **0 214 358 B2**

(12) **NEUE EUROPÄISCHE PATENTSCHRIFT**

(45) Veröffentlichungstag der neuen Patentschrift :
**14.10.92 Patentblatt 92/42**

(21) Anmeldenummer : **86100808.4**

(22) Anmeldetag : **22.01.86**

(51) Int. Cl.⁵ : **F16K 11/00, F16K 47/02**

(54) **Sanitäre Wasserarmatur.**

(30) Priorität : **29.06.85 DE 3523350**

(43) Veröffentlichungstag der Anmeldung :
**18.03.87 Patentblatt 87/12**

(45) Bekanntmachung des Hinweises auf die
Patenterteilung :
**26.10.88 Patentblatt 88/43**

(45) Bekanntmachung des Hinweises auf die
Entscheidung über den Einspruch :
**14.10.92 Patentblatt 92/42**

(84) Benannte Vertragsstaaten :
**AT BE CH DE FR GB IT LI NL SE**

(56) Entgegenhaltungen :
**DE-A- 3 224 991**
**DE-A- 3 246 350**
**DE-B- 1 550 060**
**US-A- 1 857 363**
**US-A- 2 781 519**

(73) Patentinhaber : **IDEAL-STANDARD GMBH**
**Euskirchener Strasse 80**
**W-5300 Bonn 1 (DE)**

(72) Erfinder : **Bergmann, Konrad, Dr. Dipl.-Ing.**
**zur Philippsburg 70**
**W-5560 Wittlich (DE)**
Erfinder : **Thullen, Hans W.**
**Eichenweg 68**
**W-5560 Wittlich 14 (DE)**

(74) Vertreter : **Gesthuysen, Hans Dieter, Dipl.-Ing.**
**et al**
**Patentanwälte Gesthuysen + von Rohr**
**Huyssenallee 15 Postfach 10 13 33**
**W-4300 Essen 1 (DE)**

EP 0 214 358 B2

Jouve, 18, rue Saint-Denis, 75001 PARIS

## Beschreibung

Die Erfindung betrifft eine sanitäre Wasserarmatur, insbesondere in der Form einer Eingriff-Mischbatterie, mit einem Armaturengehäuse, mit einem Griff, mit einer Scheiben, Kolben, Kugeln od. dgl. aufweisenden Steuereinheit und mit einem Schließdämpfer zur Verlängerung der Schließzeit und zur Herabsetzung der Schließgeschwindigkeit, wobei der Schließdämpfer zwischen dem Griff und der Steuereinheit vorgesehen und auf der Unterseite des Griffs oder auf der Oberseite der Steuereinheit gehalten bzw. baueinheitlich mit dem Griff oder der Steuereinheit verbunden ist.

Eingriff-Mischbatterien erfreuen sich steigender Beliebtheit. Sie sind in der Regel mit einem hebelförmigen Griff für die Mengen- und Temperatureinstellung und z. B. mit Aluminiumoxid-Scheiben, Kugeln oder Kolben aufweisenden Steuereinheiten versehen. Derartige Mischbatterien ermöglichen eine einfache und schnelle Mengen- und Temperaturregelung.

Aus ökonomischen Gründen und zur Vereinfachung der Installationen liegt es nahe, die Leitungsquerschnitte der zu den Armaturen führenden Rohre möglichst klein zu halten. Diese Bestrebungen werden durch die sogenannte "Rohr in Rohr"-Installationen mit Kunststoffrohren gefördert. Hier wird, ausgehend von einem Etagenverteiler, jede Armatur gesondert angeschlossen und die erforderlichen Querschnitte zur Versorgung der Armaturen sind im Hinblick auf die Auslaufmengen relativ klein. Dies führt zu entsprechend hohen Wassergeschwindigkeiten. Werden nun derartige Installationen mit Eingriff-Mischbatterien ausgerüstet, mit denen die Wasserabsperrung in der Regel sehr schnell vorgenommen wird, so kann es zu Druckstößen kommen, die einerseits lästige Geräusche mit sich bringen können und andererseits bestimmte Druckwerte nicht überschreiten dürfen, da sonst unzulässige Beanspruchungen der Komponenten des Systems auftreten. Die genannten Druckstöße sind auch unter dem Begriff "Wasserschläge" bekannt. Derartige Wasserschläge können durch die folgenden Maßnahmen entschärft werden:
– Fließgeschwindingkeit im Rohr vermindern,
– Schallgeschwindigkeit vermindern,
– Laufzeit der Druckwelle verkürzen,
– Schließzeit verlängern.

Die Fließgeschwindigkeit soll nun gerade nicht verringert werden. Die Schallgeschwindigkeit im Rohr ist bei Kunststoffrohren gegenüber Metalleitungen zwar vermindert, sie kann aber über die heute bei Kunststoffrohren gegebenen Werte nicht abgesenkt werden. Die Verkürzung der Laufzeit der Druckwelle kann durch die Wahl der Rohrlänge praktisch nicht beeinflußt werden. Möglich sind aber windkesselähnliche Einbauten, die die Eigenresonanz der Leitung herabsetzen, also die Laufzeit der Druckwelle vermindern, ohne die Schallgeschwindigkeit im Rohr zu beeinflussen. Solche an sich von Kolbenpumpen bekannte Einbauten, die auch auf die ganze Rohrlänge verteilt vorstellbar sind, sind teuer und wegen des möglichen Luftverlustes nicht absolut funktionssicher. Die Verlängerung der Schließzeit ist durch Erweiterung der Betätigungswege möglich, was aber nicht erwünscht ist, und durch eine Begrenzung der Schließgeschwindigkeit. Derartige, die Schließzeit verlängernde und die Schließgeschwindigkeit begrenzende Vorrichtungen werden häufig als Stoßdämpfer ausgeführt und sind sowohl von Wasserfernversorgungen und anderen Industriearmaturen her als auch bei Eingriff-Mischbatterien bekannt.

Bei der bekannten Wasserarmatur, von der die Erfindung ausgeht (vgl. die US - A - 1,857,363), ist zur Verlängerung der Schließzeit und zur Herabsetzung der Schließgeschwindigkeit zwischen dem Griff und der Steuereinheit ein Schließdämpfer vorgesehen. Dabei ist der Schließdämpfer einerseits mit dem Griff und andererseits mit der Steuereinheit verbunden. Daraus resultiert, daß der Schließdämpfer auch beim Öffnen der Wasserarmatur wirksam ist und nicht besonders einfach ausgewechselt werden kann.

Der Erfindung liegt die Aufgabe zugrunde, eine sanitäre Wasserarmatur der eingangs beschriebenen Art zu schaffen, bei der der Schließdämpfer nur beim Schliessen wirksam ist und besonders einfach ausgewechselt werden kann.

Die erfindungsgemäße sanitäre Wasserarmatur, bei der die zuvor aufgezeigte Aufgabe gelöst ist, ist dadurch gekennzeichnet, daß sich der Schließdämpfer mit seinem nicht gehaltenen bzw. nicht verbundenen Ende an der Oberseite der Steuereinheit bzw. an der Unterseite des Griffs abstützt. Dadurch, daß bei der erfindungsgemäßen sanitären Wasserarmatur der Schließdämpfer nur einseitig mit einem Bauteil der Wasserarmatur verbunden ist, nämlich entweder mit dem Griff oder mit der Steuereinheit, und sich das andere Ende des Schließdämpfers nur an der Oberseite der Steuereinheit bzw. an der Unterseite des Griffs abstützt, ist der Schließdämpfer beim Öffnen der Wasserarmatur ohne jede Funktion, so daß die Wasserarmatur einfach geöffnet werden kann. Weiterhin führt die nur einseitige Verbindung des Schließdämpfers mit einem Bauteil der Wasserarmatur auch dazu, daß der Schließdämpfer in besonders einfacher Weise ausgewechselt werden kann. Besondere Bedeutung kommt der Erfindung dann zu, wenn es sich bei der sanitären Wasserarmatur um eine Eingriff-Mischbatterie handelt, bei der der Griff für die Mengeneinstellung um eine horizontale Achse und für die Temperatureinstellung um eine vertikale Achse schwenkbar ist. Eine beidseitige Verbindung des Schließdämpfers mit Bauteilen der Wasserarmatur würde nämlich insbesondere die der Temperatureinstellung dienende Schwenkbewegung des Griffes um eine vertikale Achse beeinträchtigen.

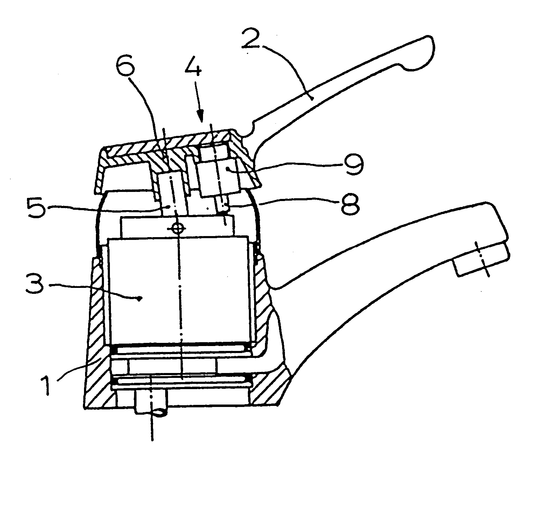

Im folgenden wird die Erfindung anhand einer lediglich ein Ausführungsbeispiel darstellenden Zeichnung nochmals erläutert. Die einzige Figur zeigt, teilweise geschnitten, eine Eingriff-Mischbatterie als Scheibenmischer.

Dargestellt ist eine Eingriff-Mischbatterie mit einem Armaturengehäuse 1, mit einem Griff 2 und mit einer nicht dargestellte Scheiben aufweisenden Steuereinheit 3. Derartige Steuereinheiten sind z. B. aus der DE - B - 1 550 060 bekannt. Die Steuereinheit 3 ist über einen Steuerhebel 5 mit einem kappenförmigen Teil 6 des Griffes 2 verbunden, welcher für die Temperatureinstellung schwenkbar und für die Mengeneinstellung quer dazu beweglich ist.

Wie ersichtlich, befindet sich zwischen dem Griff 2 und der Steuereinheit 3 ein Schließdämpfer 4, welcher aus einem stangenförmigen Dämpfungskolben 8 und einem Dämpfungszylinder 9 besteht. Der Schließdämpfer 4 ist auf der Unterseite des kappenförmigen Teils 6 des Griffes 2 gehalten bzw. baueinheitlich mit dem Griff 2 verbunden. Sein Dämpfungskolben 8 stützt sich auf der Oberseite der Steuereinheit 3 ab.

Erfindungsgemäß wird während des Schließvorgangs Flüssigkeit bzw. Luft zwischen dem Dämpfungskolben 8 und dem Dämpfungszylinder 9 komprimiert, was in der Endphase des Schließvorgangs zwangsläufig zu einer Verlängerung der Schließzeit und zu einer Herabsetzung der Schließgeschwindigkeit führt, ohne daß dies für den Benutzer störend ist.

Schließlich versteht es sich von selbst, daß die Erfindung auch bei Zweigriff-Mischbatterien Verwendung finden kann.

## Patentansprüche

1.  Sanitäre Wasserarmatur, insbesondere in der Form einer Eingriff-Mischbatterie, mit einem Armaturengehäuse (1), mit einem Griff (2), mit einer Scheiben, Kolben, Kugeln od. dgl. aufweisenden Steuereinheit (3) und mit einem Schließdämpfer (4) zur Verlängerung der Schließzeit und zur Herabsetzung der Schließgeschwindigkeit, wobei der Schließdämpfer (4) zwischen dem Griff (2) und der Steuereinheit (3) vorgesehen und auf der Unterseite des Griffs (2) oder auf der Oberseite der Steuereinheit (3) gehalten bzw. baueinheitlich mit dem Griff (2) oder der Steuereinheit (3) verbunden ist, **dadurch gekennzeichnet**, daß sich der Schließdämpfer (4) mit seinem nicht gehaltenen bzw. nicht verbundenen Ende an der Oberseite der Steuereinheit (3) bzw. an der Unterseite des Griffs (2) abstützt.

## Claims

1.  Sanitary water fitting, in particular in the form of a single handle-mixing-valve unit, having a fitting housing (1), a handle (2), a control unit (3) with discs, pistons, ball members or the like and having a closing damper (4) for prolonging the closing time and reducing the closing speed, the closing damper (4) being provided between the handle (2) and the control unit (3) and retained on the underside of the handle (2) or on the upper side of the control unit (3) or integrally joined as a modular unit to the handle (2) or the control unit (3), characterised in that the closing damper (4) is supported with its non-retained or non-connected end to the upper side of the control unit (3) or on the underside of the handle (2).

## Revendications

1.  Système de robinet d'eau sanitaire, en particulier pour un ensemble mitigeur à poignée de manoeuvre, comportant un corps (1), une poignée (2), une unité de commande (3) pourvue de disques, de pistons, de billes ou d'organes analogues, et un amortisseur de fermeture (4) pour augmenter la durée du mouvement de fermeture et en réduire la vitesse, cet amortisseur de fermeture (4) étant prévu entre la poignée (2) et l'unité de commande (3), et se trouvant fixé à la face inférieure de la poignée (2) ou à la face supérieure de l'unité de commande (3), ou pouvant faire partie de la poignée (2) ou de l'unité de commande (3), caractérisé en ce que l'amortisseur de fermeture (4), par son extrémité qui n'est ni maintenue ni fixée, est en appui contre la face supérieure de l'unité de commande (3) ou contre la face inférieure de la poignée (2).

3